# EUROPEAN PATENT SPECIFICATION

(11) **EP 1 851 477 B1**
(45) Date of publication and mention of the grant of the patent: **04.07.2012**
(21) Application number: 06706056.6
(22) Date of filing: 14.02.2006
(51) Int. Cl.: F16L 55/11, E02B 17/00

(54) **A PLUG AND METHOD FOR ESTABLISHING SUCH PLUG INSIDE A PIPE**
STOPFEN UND VERFAHREN ZUR ANORDNUNG SOLCH EINES STOPFENS IN EINEM ROHR
BOUCHON ET PROCEDE DE PLACEMENT DE CE BOUCHON DANS UN TUYAU

(30) Priority: 14.02.2005 DK 200500210
(43) Date of publication of application: 07.11.2007
(73) Proprietor: Illinois Tool Works Inc., Glenview, IL 60026-1215 (US)
(72) Inventor: MORTENSEN, Uffe, DK-9000 Aalborg (DK); KVIST NIELSEN, Brian, DK-9200 Aalborg SV (DK); HANSEN, Børge, DK-9200 Aalborg SV (DK); MOMME PETERSEN, Thure, DK-9610 Nørager (DK)
(74) Representative: Plougmann & Vingtoft A/S
(86) International application number: PCT/DK2006/000085
(87) International publication number: WO 2006/084473

(56) References cited:
- FR-A- 1 239 800
- US-A- 4 142 371
- US-A- 4 286 629
- US-A- 4 292 004

## Description

### Field of the Invention

The present invention relates to a pipe provided inside with a plug and a method for establishing such plug inside a pipe.

### Background of the Invention

Under a number of different circumstances it is desirable to be able to establish a plug inside a pipe. In the art, a number of different solutions to this problem have been suggested, which will be mentioned below.

For steel pipes, for off-shore constructions in particular in the so-called splash zone, which is the zone around the pipe in which the water level may fluctuate due to low tide, high tide, and also due to wave action, the provision of water and oxygen provides for an added risk of corrosion. Outside the pipe, the risk of corrosion is a minor problem in that it is possible to apply a surface coating fairly cheaply on the outside of the pipe, such that corrosion attacks may be minimised. Inside the pipe, however, it may be difficult to gain access to the inner surface of a pipe in the splash zone. This is particularly true if the pipe in question is part of an off-shore construction such as an oil drilling rig, where one end of the pipe is buried in the seabed, and the opposite end may be 30-40 or more metres elevated above sea level, whereby access to the splash zone from either end of the pipe is very difficult.

Attempts have been made to provide a dry environment around the pipe in the splash zone, whereupon access is gained to the interior of the pipe, which thereafter has been provided with a corrosion-resistant layer. Access to the interior of the pipe may be carried out by drilling one or more holes along the circumference of the pipe and spraying a suitable corrosion-inhibiting material onto the inner wall surface of the pipe. The hole is thereafter sealed, and a corrosion-resistant layer is applied to the inner surface of the pipe in the splash zone.

This method, however, has a number of drawbacks. In particular, it is quite costly to provide a substantially dry environment around the pipe where the treatment is to be carried out. Furthermore, it is very difficult to control the application of the corrosion-resistant layer in such a manner that it is assured that the entire inner surface covering the entire splash zone has been provided with sufficient corrosion-resistant material for a satisfactory corrosion-resistant treatment being achieved. Furthermore, for pumping wells, these are usually established by having an outer main pipe inside which one or more medium pipes for allowing the natural gas or oil to be conveyed to the surface are arranged. Where one or more pipes are arranged inside the main pipe, it is extremely difficult to assure that all surfaces in the splash zone, i.e. in the zone where the inside of the pipe may switch between being wet or completely immersed in water to being only partly immersed in water, are satisfactorily treated with the corrosion-resistant material.

In another suggested method, the interior of the pipe is emptied from water by pumping the water out of the interior of the pipe. Due to the immersion of the pipe into the seabed, water will ingress into the pipe at a very slow rate, whereby it is possible to pump the inside of the pipe substantially free from water. Hereafter, sand is filled into the pipe from above. By calculating the interior volume inside the pipe up to a certain level above the splash zone, the amount of sand necessary is filled into the interior of the pipe. Then, a concrete plug is cast, again by calculating the theoretical volume of concrete needed in order to fill up the volume from the top surface of the sand to the desired level above the splash zone such assuring a corrosion-protective concrete plug being provided.

Use of this method has proven that for single pipes, i.e. main pipes without any interior pipes, substantially satisfactory results may be achieved. However, in situations where a number of secondary pipes are arranged inside the main pipe, the quality of the corrosion protection and the security with which the method is carried out encompasses a number of drawbacks. Firstly, it is very difficult to control and check that the volume of sand, which has been calculated theoretically, takes up the space inside the pipe in practise, such that the concrete plug, which is placed on top of the surface of the sand, is positioned correctly in relation to the splash zone. Practise has actually indicated that it is very difficult to sufficiently compact the sand below the plug. Usually, a surplus of sand amounting to 15% or more is left over. This indicates that air or water pockets are present in the sand column below the lowermost point of the plug and the seabed. The level of the sand may be checked by lowering a measuring wire into the pipe such that the distance from the top of the pipe to the surface of the sand may be determined. However, when the concrete is pumped down into the pipe in order to be placed on top of the sand column, the pockets in the sand column may collapse due to the added weight placed on the sand such that the density of the concrete plug and/or the extension of the concrete plug becomes uncertain. This is even truer where the method is applied under other circumstances, for example when it is desirable to reinforce the connection where one pipe has a branch pipe, which is the second problem the present invention addresses. In this situation it is very difficult to determine and assure that the concrete pumped into the pipe will actually flow up and into the branch pipe to the desired level so that the desired result, namely a reinforced connection point, may be achieved.

Furthermore, this method requires a substantial amount of material to be transported to the pipes in question, which in particular for off-shore installations renders the method a very costly solution to the problem.

A plug assembly sealing a jacket leg of an offshore platform is known from document US 4292 004.

### Object of the Invention

The purpose of the present invention may thus derive from a multitude of problems, but problems which the present invention addresses may be twofold, namely firstly to provide anti-corrosion protection means inside a pipe in a specific region where the pipe is especially exposed to corrosion forces from a corrosive environment such as sea-water, and/or secondly to reinforce the structure at specific predetermined places, where the pipe is especially exposed to dynamic forces from e.g. harsh weather waves at sea.

Consequently, it is the object of the present invention to overcome the drawbacks of prior art, and provide a method which is both cost-efficient, reliable and provides a high-quality plug such that, depending on the purpose, a corrosion protection and/or reinforcement may be provided at desired positions inside a hollow structure.

### Description of the Invention

The present invention addresses this by providing a method for establishing a plug inside a pipe, in particular a vertically or slantingly arranged pipe, where said pipe has first and second ends, and where the plug is arranged inside the pipe, where a liquid surface is present at least inside the pipe, below the level at which it is desirable to establish the plug, where a buoyant layer is established on top of said liquid surface, and where a plug material is placed on top of said buoyant layer.

By establishing a buoyant layer on top of the water surface, a number of advantages are achieved. Firstly, the water column below the buoyant layer will be completely supportive, i.e. there will be no air pockets or other aspects which may cause collapse when the surface is loaded, and which, if present, thereby creates the uncertainty as to the level from where the future plug will be established.

Additionally, as the water is utilised there is no need to transport huge quantities of sand and place the sand inside the pipe. Hereby, a substantial cost-reducing factor is introduced, and even more so as the buoyant layer only has a very limited volume. The volume depends on the material placed on top of the buoyant layer as well as the extent of the materials placed in order to establish the plug. Therefore, by simply pumping the liquid, which in most cases will be water, perhaps polluted by corrosion products or other foreign substances, out of the pipe, a substantially constant level is achieved inside the pipe at a well-defined level. Due to the end of the pipe being placed either in a seabed or other substantially impermeable material, or if a plug has been provided in situations where there is access to the lower end of the pipe, the water level inside the pipe may be maintained substantially at a constant level for the duration of establishing the buoyant layer and the plug above the buoyant layer.

The buoyant layer may be designed at least according to two different principles, or a combination of the two. The first principle is based on the simple Archimedes' law where the amount of buoyant material with a known density may be calculated such that sufficient buoyancy is provided when the plug material is placed.

The other principle provides a buoyant layer, but the buoyant layer at the same time provides a substantially tight liquid barrier such that the buoyant layer will support the plug material as the plug material is placed on the buoyant layer, and the underlying liquid column, namely e.g. water, which is substantially uncompressible, will support the buoyant layer. In particular buoyant layers made from materials which have a tendency to adhere to the inner side of the pipe and which have a certain flexibility are useable when applying this principle.

A combined system where the buoyant layer has both a certain degree of buoyancy which will compensate for the weight of the plug material placed on top and which at the same time provides a water-tight barrier may also be applied.

In a further advantageous embodiment, the buoyant layer is made from a material chosen from granular and/or liquid materials and/or solid materials.

As already explained above, the materials for the buoyant layer must have the ability to float on the liquid surface, and may also have such characteristics that the buoyant layer may be put in place by for example being filled from the top of the pipe, and thereafter by more or less self-spreading and levelling on the surface of the liquid establish the buoyant layer. These characteristics are achievable with granular or liquid materials which have a density less than water or the liquid in question.

In a further advantageous embodiment, the buoyant layer is made from a buoyant material, which material is a two-component liquid foam material, and where a double hose tool has a mixing chamber and a discharge nozzle in one end, and connection means for being connected to material containers and dosing equipment in the opposite ends, where said end with the mixing chamber is lowered into the pipe till slightly above the liquid surface, where said two components are mixed in the mixing chamber and deposited onto the liquid surface and allowed to foam, and where optionally further depositing of buoyant material is continued while the nozzle is withdrawn such that the buoyant material is also used for the plug material.

By providing a tool for use with the method such that it is possible to mix two component materials immediately before depositing the mixed material in its place of use, a whole range of other materials may be used with the inventive method according to the invention. Foams which are able to expand and adhere to the inner surfaces of the pipes are especially advantageous in that in addition to their buoyant capacities, they also utilise the integrity of the materials in combination with the adherence to the inner surface in order to provide carrying strength for the plug placed on top of the foam material.

The foam material may in itself, depending on the criteria for corrosion protection and the like, be the material from which the entire plug is made. In this application, the foam material is distributed through the inventive tool, and at the same time the tool is withdrawn from the pipe such that the foam material is distributed and expanded simultaneously with the tool being withdrawn. The foam characteristics are known, and thereby calculations determining how much foam material, i.e. how much of the two components are necessary for a given size of plug, may be calculated beforehand.

Where the two components are deposited directly onto the liquid, e.g. water surface, it is of course important to select a material where the presence of the liquid, e.g. water, does not influence the foaming capabilities of the finished foam material.

In a further advantageous embodiment, the buoyant layer is made from a granular material, where said material is chosen among or in combinations of: polystyrene granules, wood pellets, chips or granules, polymers, air-filled balls, buoyant sponges, expanded clay granules, or other buoyant non-absorbing granular materials, where said materials are placed on the liquid surface by allowing the material to fall by gravity through the pipe unto the liquid surface either freely or guided by conduits, and where the buoyant material is provided in a sufficient amount in order to support the plug material, which is placed on the buoyant layer.

The advantages of using granular material are of particular interest when secondary pipes are arranged inside the main pipe. By filling in the granular material from the top of the pipe and letting it fall freely down the pipe in the space between the main pipe and the secondary pipes, the granular material which is buoyant will be deposited on the surface of the water inside the main pipe. As the amount of granular material builds up, it will automatically spread and eventually cover the entire liquid surface. In this manner, it is possible to build up a layer which completely covers the liquid surface present between the main pipe and any secondary pipes. The size of the granules, wood pallets, chips or other buoyant materials is selected such that, depending on the material, it is assured that the singular granules will be able to move independently, and thereby at a given layer, thickness assume a substantially complete covering of the liquid surface.

In a further advantageous embodiment of the invention, the plug material is deposited on the buoyant layer, and the plug material is selected among foam materials or other expandable materials, cement-based materials hereunder in particular concrete and especially high-strength concrete, or one-component or two-component epoxy-based materials, where said plug material is placed by means of conduits removably placed inside the pipe for conveying the plug material onto said liquid surface.

By designing the plug, it is possible to calculate the amount of material which needs to be placed inside the main pipe in order to provide the reinforcement inside the main pipe or the corrosion protection in the splash zone, and thereby also calculate the amount of buoyant material which is necessary to place on top of the liquid surface in order for the plug material not to cause the buoyant layer either to disintegrate or to sink altogether. Due to the characteristics of the buoyant material, the plug material may be selected from substantially any type of material which is suitable to be deposited on the buoyant layer.

In a further advantageous embodiment, one or more secondary pipes are arranged inside the main pipe, and the plug is established between the inner side of the main pipe and the outer side of the one or more secondary pipes.

This situation has already been mentioned above with reference to some of the other advantageous embodiments of the invention, but the constitution of the buoyant layer is particularly advantageous in connection with situations where one or more secondary pipes are arranged inside the main pipe.

Also, as already described above, the method is of particular interest where the main pipe is placed in a volume of water, and where the plug is established in the water's splash zone on the pipe, and where the water level inside the pipe is lowered by means of a pump. Due to the slow ingress of water through the seabed, and thereby into the main pipe, it is possible to lower the level of the water inside the pipe by means of a pump for a period which is long enough in order to establish both the buoyant layer and the plug material. The buoyant layer and especially the plug material may be designed such that the downward pressure from these two layers will overcome the water pressure from the water below the buoyant layer inside the pipe.

In a further advantageous embodiment, it is possible to combine the different types of materials in a three-layer plug constructions, where first a buoyant layer is provided on the liquid surface, and subsequently a layer is provided adhesively attaching itself to the interior side of the pipe, and finally the plug material is provided on top of the subsequent layer.

In this manner, it is possible to firstly create a rather shallow buoyant layer which only needs to carry the subsequent layer for example from a foam material adhesively attaching itself to the interior side of the main pipe. The foam layer has an integrity which is higher than for example that of a granular buoyant layer such that a rather liquid type layer is created, and at the same time a layer which creates an effective seal between the underlying water column and the plug material to be deposited. Due to the integrity of the buoyant layer and the e.g. adhesively attached foam layer, quite a heavy load may be placed on top of these two layers, such that quite substantial amounts of concrete, and thereby rather high plugs, may be installed in this manner.

In a further advantageous embodiment, the layer adhesively attaching itself to the inner side of the pipe may be selected from among PUR, PIR or other one-component or two-component foam or expandable materials or polymer materials, which material is placed by utilising a single, double or more hose tool having a mixing chamber and a discharge nozzle in one end, and connection means for being connected to material containers and dosing equipment in the opposite end, and where said end with the mixing chamber is lowered into the pipe till slightly above the buoyant layer, and where said material components are mixed in the mixing chamber and deposited onto the buoyant layer and allowed to foam and/or expand and thereby adhere to the inner side of the pipe.

The invention also concerns a pipe provided inside with a plug, where the plug comprises a buoyant layer established on top of a liquid surface present inside the pipe, below the level at which it is desirable to establish the plug, and where the plug further comprises a plug material placed on top of said buoyant layer.

### Description of the Drawings

The invention will now be explained with reference to the drawings, wherein
- fig. 1: illustrates the way of construction of the plug In one embodiment,
- fig. 2: illustrates a pipe having a branch connection,
- fig. 3: illustrates a cross-section through concentrically arranged pipes,
- fig. 4: illustrates a main pipe and four secondary pipes,
- fig. 5: illustrates a pipe placed substantially vertically, and embedded in a seabed,
- fig. 6: illustrates a tool for placing two component materials in the pipe.

### Detailed Description of the Invention

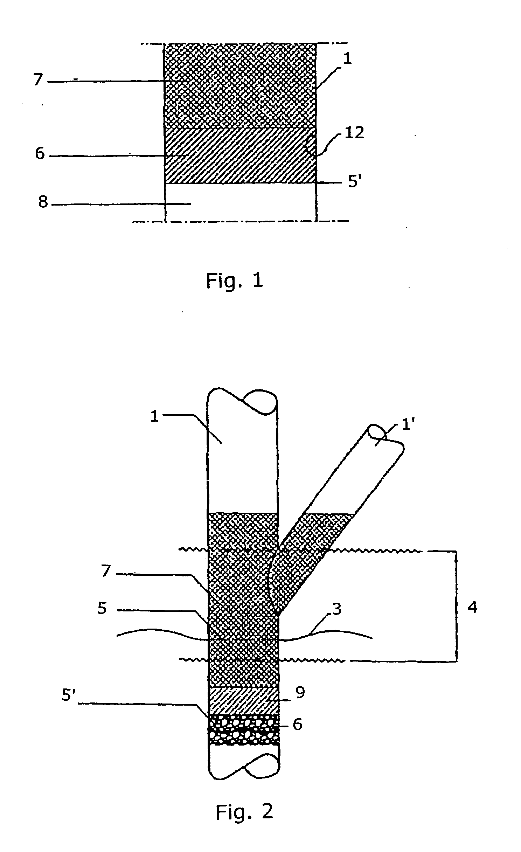

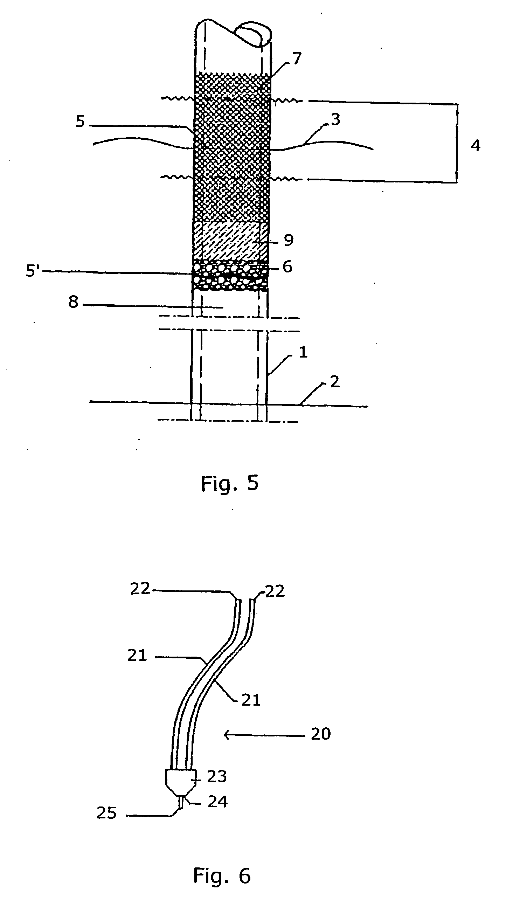

In fig. 1, a close-up of a plug is illustrated. In place of the granular material which is illustrated with respect to figs. 5 and 2 described below, the buoyant layer is created by a foam material, the characteristics of which are not influenced by the presence of water. However, it will be possible as an alternative to a foam material to use a granular material or a solid material. The buoyant layer 6 will, in case of the buoyant layer being created by a foam layer, create a substantially liquid-tight barrier above the water column 8 situated below the buoyant layer 6 and at the same time possibly adhere to the inside 12 of the pipe 1. In this manner, when the plug material 7 is placed on top of the foam material 6, a very stable bottom for the plug is provided.

Turning to fig. 2, a main pipe 1 having a branch section 1' is illustrated. In some instances, it may be interesting to reinforce the connection between the main pipe 1 and the branch pipe 1', or as explained above to provide a corrosion-resistant plug in the splash zone 4 indicated by the rippled lines.

Therefore, the water level 5 inside the pipe is lowered to below the lowest level of the splash zone to a level illustrated by 5'. The buoyant layer 6 is established as explained above, or may be a combined buoyant and sealing layer, where first a layer of granular particles is placed, after which a sealing layer consisting of a two-component foam is placed on top of the granule layer. The foam 9 creates a substantially liquid-tight layer, which rests on top of the granular buoyant layer 6. Thereafter, the plug material or, in case reinforcement is needed, the reinforcement material is placed on top of the buoyant layer 6 and the foam layer 9 covering the entire reinforcement zone, or splash zone 4.

For reinforcement purposes as well as protection against corrosion, cement-based composite materials of very high strength may be utilised. These materials in addition to being very dense and compact also provide substantial reinforcement to the pipe construction. By placing the plug material, for example a flowable cement-based composite material, the material will fill into the branch pipe and thereby create an effective plug in the desired area 4.

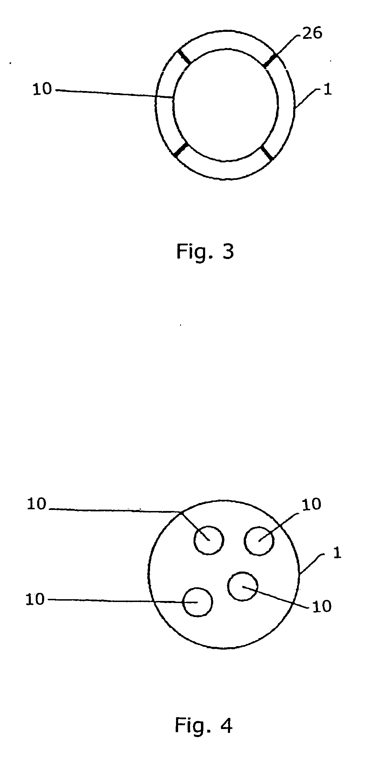

In fig. 3, a cross-section of a pipe is illustrated where a secondary pipe 10 is placed inside the main pipe 1. The secondary pipe 10 may be used in order to pump up oil, natural gas or other flowable resources from the underground. It is therefore interesting to be able to place a plug between the inside of the main pipe and the outside of the secondary pipe 10. By filling granular buoyant material into the space between the two pipes from above, for example from the working platform (not illustrated), the granular material will, due to gravity and its ability to float, distribute itself in a layer covering the entire area between the main pipe 1 and the secondary pipe 10.

The same situation will arise with reference to fig. 4, where a number of secondary pipes 10 are arranged inside a main pipe 1.

In fig. 5, a pipe 1 is arranged in a body of water such that part of the pipe is embedded in the seabed 2, and part of the pipe is extending above the surface 3 of the body of water. The water surface 3 creates a splash zone 4, indicated as the area between the two rippled lines. In particular in this area, pipes placed in water will be exposed to corrosion, and will therefore need protection as explained above. Inside the pipe 1, the water will have a substantially even surface 3. This surface 3 may fluctuate with the tide due to water ingress through the seabed 2, and into the interior of the pipe 1.

It is therefore the purpose of the present invention to install a corrosion-protecting layer inside the main pipe 1, said layer covering the entire splash zone in order to reduce corrosion and the risk of corrosion.

Therefore, the water level 5 is lowered by pump means to the level 5'. Thereafter, a buoyant layer, for example consisting of wood chips, buoyant expanded clay particles or the like, is placed on top of the liquid surface 5'. Due to the weight of the granular material, part of the buoyant material will be submerged into the liquid present inside the main pipe 1. The buoyant material 6 will therefore create a buoyant layer covering the entire surface 5', but may have slightly varying thickness due to the packing of the independent granular particles making up the buoyant layer 6.

After having placed the buoyant layer, the material constituting the plug itself may be placed by depositing the material on top of the buoyant layer 6. The plug material 7 is thereafter deposited in a thickness which at least covers the splash zone 4. In this manner, a corrosion-resistant protection plug has been provided inside the main pipe, which plug "floats" on top of the water column 8 inside the main pipe above the buoyant layer 6.

In fig. 6, a tool is illustrated in a schematic fashion which may be used in order to place the two-component materials in the pipe. It is important that the components are mixed as close to the place where they are to be deposited as possible. For this purpose, the tool 20 is provided with two long flexible hoses 21. Obviously, the tool 20 may be provided with additional hoses 21 if the material to be used comprises more than two components. The materials are led into the hoses 21 by appropriate connection means 22 and will, due to gravity, flow through the hoses from the connection 22 to the hoses 21 and arrive in the mixing chamber 23. The mixing chamber 23 may be equipped with active mixing means such as for example an electrically driven mixing screw or the like, and may, further be equipped with an electrically operated valve 24 which regulates the outflow of mixed material through the nozzle 25. In this manner, it is possible to lower the tool 20 down the main pipe to a level slightly above the lowered water level 5' or on top of the granular materials 6 in order to deposit the foam material, which is therefore mixed immediately above the level where it is supposed to be deposited.

In the embodiments illustrated with reference to figs. 3 and 4, it is also possible to use the tool 20 in that the tool 20 may be constructed having such a size that it easily will fit in the space between the main pipe 1 and the secondary pipes 10. Furthermore, the tool 20 may be lowered down at different places such that the distance keepers 26 (see fig. 4) will not hamper the correct depositing of the material around the plug.

Although the invention has been explained with reference to pipes placed in water, the method is also applicable to pipes placed in an environment where no water is present, but in these instances the pipe may advantageously be filled with liquid up to the level 5' such that the method according to the present invention may be carried out from this liquid level and upwards.

The invention shall not be construed as being limited by the detailed examples mentioned above, but shall only be limited by the scope of protection afforded by the appending claims.

## Claims

1. Method for establishing a plug inside a pipe (1), in particular a vertically or slantingly arranged pipe, where said pipe (1) has first and second ends, and where the plug is arranged inside the pipe, where a liquid (8) surface is present at least inside the pipe, below the level at which it is desirable to establish the plug, and where a buoyant layer (6) is established on top of said liquid (8) surface, and where a plug material (7) is placed on top of said buoyant layer (6).

2. Method according to claim 1, wherein the buoyant layer is made from a material chosen from granular materials.

3. Method according to claim 1, wherein the buoyant layer is made from a material chosen from liquid materials.

4. Method according to claim 1, wherein the buoyant layer is made from a material chosen from solid materials.

5. Method according to any of claims 2 to 4, wherein the buoyant layer is made from a buoyant material, which material is a two-component liquid foam material, and where a double hose tool is having a mixing chamber and a discharge nozzle in one end, and connection means for being connected to material containers and dosing equipment in the opposite ends, and where said end with the mixing chamber is lowered into the pipe till slightly above the liquid surface, and where said two components are mixed in the mixing chamber, and deposited onto the liquid surface and allowed to foam, and where optionally further depositing of buoyant material is continued while the nozzle is withdrawn such that the buoyant material also is used for the plug material.

6. Method according to any of claim 2 to 4, wherein the buoyant layer is made from a granular material, where said material is chosen among or in combinations of: polystyrene granules, wood pellets, chips or granules, polymers, air-filled balls, buoyant sponges, expanded clay granules, or other buoyant non-absorbing granular materials, where said materials are placed on the liquid surface by allowing the material to fall by gravity through the pipe onto the liquid surface either freely or guided by conduits, and where the buoyant material is provided in an amount capable of supporting the plug material, which is placed on top of the buoyant layer.

7. Method according to claim 5 or 6, wherein the plug material is deposited on the buoyant layer, and where said plug material is selected among foam materials or other expandable materials, cement-based materials including in particular concrete and especially high-strength concrete, or one-component or two-component epoxy-based materials, where said plug material is placed by means of conduits removably placed inside the pipe for conveying the plug material onto said liquid surface.

8. Method according to any of claims 1 to 7, wherein one or more secondary pipes are arranged inside the main pipe, and where the plug is established between the inner side of the main pipe and the outer side of the one or more secondary pipes.

9. Method according to claim 1, wherein the main pipe is placed in a volume of water, and where the plug is established in a horizontal level corresponding to the water's splash zone on the pipe, and where the water level inside the pipe is lowered by means of a pump.

10. Method where first a buoyant layer is provided on top of the liquid surface by means of the method according to any of claims 1 to 6, and subsequently a layer is provided capable of adhesively attaching itself to the interior side of the pipe, and finally the plug material is provided on top of the subsequently provided layer by means of the method according to any of claims 5 or 7.

11. Method according to claim 10, wherein the layer adhesively attaching itself to the inner side of the pipe may be selected from among PUR, PIR or other one-component or two-component foam or expandable materials or polymer materials, which material is placed by utilising a single, double or more hose tool having a mixing chamber and a discharge nozzle in one end, and connection means for being connected to material containers and dosing equipment in the opposite ends, and where said end with the mixing chamber is lowered into the pipe till slightly above the buoyant layer, and where said material components are mixed in the mixing chamber and deposited onto the buoyant layer and allowed to foam and/or expand and thereby adhere to the inner side of the pipe.

12. Pipe (1) provided inside with a plug, in particular a vertically or slantingly arranged pipe, where said pipe has first and second ends, where the plug comprises a buoyant layer (6) established on top of a liquid (8) surface being present inside the pipe, and where the plug further comprises a plug material (7) placed on top of said buoyant layer (6).

13. Pipe according to claim 12, wherein the buoyant layer is made from a material chosen from granular materials.

14. Pipe according to claim 12, wherein the buoyant layer is made from material chosen among or in combinations of: polystyrene granules, wood pellets, chips or granules, polymers, air-filled balls, buoyant sponges, expanded clay granules, or other buoyant non-liquid-absorbing granular materials.

15. Pipe according to claim 12, wherein the buoyant layer is made from a material chosen from liquid materials.

16. Pipe according to claim 15, wherein the buoyant layer is made from a two-component liquid foam material.

17. Pipe according to claim 12, wherein the buoyant layer is made from a material chosen from solid materials.

## Patentansprüche

1. Verfahren zum Platzieren eines Stopfens in einem Rohr (1), insbesondere einem vertikal oder schräg angeordneten Rohr, wobei das Rohr (1) ein erstes und ein zweites Ende aufweist und wobei der Stopfen in dem Rohr angeordnet wird, wobei eine Flüssigkeitsfläche (8) mindestens in dem Rohr vorhanden ist, unter deren Höhe der Stopfen platziert werden soll, und wobei eine schwimmende Lage (6) oben auf der Flüssigkeitsfläche (8) platziert wird und wobei ein Stopfenmaterial (7) oben auf der schwimmenden Lage (6) platziert wird.

2. Verfahren nach Anspruch 1, wobei die schwimmende Lage aus einem aus körnigen Materialien ausgewählten Material hergestellt ist.

3. Verfahren nach Anspruch 1, wobei die schwimmende Lage aus einem aus flüssigen Materialen ausgewählten Material hergestellt ist.

4. Verfahren nach Anspruch 1, wobei die schwimmende Lage aus einem aus festen Materialen ausgewählten Material hergestellt ist.

5. Verfahren nach einem der Ansprüche 2 bis 4, wobei die schwimmende Lage aus einem schwimmenden Material hergestellt ist, wobei das Material ein zweikomponentiger flüssiger Schaumstoff ist und wobei ein Doppelschlauchwerkzeug eine Mischkammer und eine Austragsdüse in einem Ende und Verbindungsmittel zur Verbindung mit Materialbehältern und Dosiereinrichtungen in den gegenüberliegenden Enden aufweist, und wobei das Ende mit der Mischkammer bis etwas über der Flüssigkeitsfläche in das Rohr abgesenkt wird und wobei die beiden Komponenten in der Mischkammer vermischt werden und auf die Flüssigkeitsfläche abgelagert und aufschäumen gelassen werden, und wobei weiterhin wahlweise ein schwimmendes Material weiter abgelagert wird, während die Düse zurückgezogen wird, so dass das schwimmende Material auch für das Stopfenmaterial verwendet wird.

6. Verfahren nach einem der Ansprüche 2 bis 4, wobei die schwimmende Lage aus einem körnigen Material hergestellt ist, wobei das Material aus Polystyrolgranulat, Holzpellets, Spänen oder Körnern, Polymeren, luftgefüllten Kugeln, schwimmenden Schwämmen, Blähtongranulat oder anderen schwimmenden, nicht absorbierenden körnigen Materialien oder Kombinationen davon ausgewählt wird, wobei die Materialien auf die Flüssigkeitsfläche angeordnet werden, indem ein Fallen des Materials durch Schwerkraft durch das Rohr auf die Flüssigkeitsfläche entweder frei oder durch Leitungen geführt gestattet wird, und wobei das schwimmende Material in einer Menge bereitgestellt wird, die das Stopfenmaterial stützen kann, das oben auf der schwimmenden Lage angeordnet wird.

7. Verfahren nach Anspruch 5 oder 6, wobei das Stopfenmaterial auf die schwimmende Lage abgelagert wird und wobei das Stopfenmaterial unter Schaumstoffen oder anderen expandierbaren Materialien, Materialien auf Zementbasis, darunter besonders Beton und insbesondere hochfesten Beton, oder einkomponentige oder zweikomponentige Materialien auf Expoxidbasis ausgewählt wird, wobei das Stopfenmaterial mittels Leitungen angeordnet wird, die entfernbar in dem Rohr platziert werden, um das Stopfenmaterial auf die Flüssigkeitsfläche zu befördern.

8. Verfahren nach einem der Ansprüche 1 bis 7, wobei ein oder zwei Nebenrohre in dem Hauptrohr angeordnet werden und wobei der Stopfen zwischen der Innenseite des Hauptrohrs und der Außenseite des einen oder der mehreren Nebenrohre platziert wird.

9. Verfahren nach Anspruch 1, wobei das Hauptrohr in einer Wassermenge angeordnet wird und wobei der Stopfen in einer horizontalen Ebene, die der Spritzzone des Wassers am Rohr entspricht, platziert wird, und wobei der Wasserstand im Rohr mittels einer Pumpe abgesenkt wird.

10. Verfahren, bei dem zuerst eine schwimmende Lage mittels des Verfahrens nach einem der Ansprüche 1 bis 6 oben auf der Flüssigkeitsfläche vorgesehen wird und dann eine Lage vorgesehen wird, die an die Innenseite des Rohrs anhaften kann, und schließlich das Stopfenmaterial mittels des Verfahrens nach einem der Ansprüche 5 oder 7 oben auf der anschließend vorgesehenen Lage vorgesehen wird.

11. Verfahren nach Anspruch 10, bei dem die Lage, die an der Innenseite des Rohrs anhaftet, unter PUR, PIR oder anderen einkomponentigen oder zweikomponentigen Schaumstoff- oder expandierbaren Materialien oder Polymermaterialien ausgewählt werden kann, wobei das Material durch Verwendung eines Einzel-, Doppel- oder Mehrfachschlauchwerkzeugs mit einer Mischkammer und einer Austragsdüse in einem Ende und Verbindungsmitteln zur Verbindung mit Materialbehältern und Dosiereinrichtungen in den gegenüberliegenden Enden angeordnet wird, und wobei das Ende mit der Mischkammer bis etwas über der schwimmenden Lage in das Rohr abgesenkt wird und wobei die Materialkmomponenten in der Mischkammer vermischt werden und auf die schwimmende Lage abgelagert und aufschäumen und/oder expandieren gelassen werden und dadurch an der Innenseite des Rohrs haften.

12. Rohr (1), in dem ein Stopfen vorgesehen wird, insbesondere ein vertikal oder schräg angeordnetes Rohr, wobei das Rohr ein erstes und ein zweites Ende aufweist, wobei der Stopfen eine schwimmende Lage (6) umfasst, die oben auf einer sich im Rohr befindenden Flüssigkeitsfläche (8) platziert wird, und wobei der Stopfen weiterhin ein oben auf der schwimmenden Lage (6) angeordnetes Stopfenmaterial (7) umfasst.

13. Rohr nach Anspruch 12, wobei die schwimmende Lage aus einem aus körnigen Materialien ausgewählten Material hergestellt ist.

14. Rohr nach Anspruch 12, wobei die schwimmende Lage aus einem aus Polystyrolgranulat, Holzpellets, Spänen oder Körnern, Polymeren, luftgefüllten Kugeln, schwimmenden Schwämmen, Blähtongranulat oder anderen schwimmenden, nichtflüssigkeitsabsorbierenden körnigen Materialien oder Kombinationen davon ausgewählt wird.

15. Rohr nach Anspruch 12, wobei die schwimmende Lage aus einem aus flüssigen Materialien ausgewählten Material hergestellt ist.

16. Rohr nach Anspruch 15, wobei die schwimmende Lage aus einem zweikomponentigen flüssigen Schaumstoff hergestellt ist.

17. Rohr nach Anspruch 12, wobei die schwimmende Lage aus einem aus festen Materialien ausgewählten Material hergestellt ist.

## Revendications

1. Procédé pour placer un bouchon à l'intérieur d'un tuyau (1), en particulier un tuyau disposé verticalement ou de manière inclinée, ledit tuyau (1) ayant des première et deuxième extrémités, et le bouchon étant disposé à l'intérieur du tuyau, une surface de liquide (8) étant présente au moins à l'intérieur du tuyau, sous le niveau auquel on souhaite placer le bouchon, et une couche flottante (6) étant placée au-dessus de ladite surface de liquide (8), et un matériau de bouchon (7) étant positionné au-dessus de ladite couche flottante (6).

2. Procédé selon la revendication 1, dans lequel la couche flottante est fabriquée en un matériau choisi parmi des matériaux granulaires.

3. Procédé selon la revendication 1, dans lequel la couche flottante est fabriquée en un matériau choisi parmi des matériaux liquides.

4. Procédé selon la revendication 1, dans lequel la couche flottante est fabriquée en un matériau choisi parmi des matériaux solides.

5. Procédé selon l'une quelconque des revendications 2 à 4, dans lequel la couche flottante est fabriquée en un matériau flottant, lequel matériau est un matériau en mousse liquide à deux composants, et où un outil à double flexible comprend une chambre de mélange et une buse de décharge dans une extrémité, et des moyens de connexion pour la connexion à des contenants de matériau et un équipement de dosage dans les extrémités opposées, et où ladite extrémité avec la chambre de mélange est abaissée dans le tuyau jusqu'à ce qu'elle soit légèrement au-dessus de la surface du liquide, et où lesdits deux composants sont mélangés dans la chambre de mélange et sont déposés sur la surface du liquide et on les laisse mousser, et où en option on continue de déposer du matériau flottant tandis que la buse est retirée afin que le matériau flottant soit également utilisé pour le matériau de bouchon.

6. Procédé selon l'une quelconque des revendications 2 à 4, dans lequel la couche flottante est fabriquée en un matériau granulaire, où ledit matériau est choisi parmi ou en combinaison avec les matériaux suivants : granulés de polystyrène, pastilles, copeaux ou granulés de bois, polymères, billes remplies d'air, éponges flottantes, granulés d'argile expansée, ou d'autres matériaux granulaires flottants non absorbants les liquides, où lesdits matériaux sont positionnés sur la surface de liquide en permettant au matériau de tomber sous l'effet de la gravité à travers le tuyau sur la surface de liquide soit librement soit de manière guidée par des conduits, et où le matériau flottant est fourni dans une quantité capable de supporter le matériau de bouchon, qui est positionné par-dessus la couche flottante.

7. Procédé selon la revendication 5 ou 6, dans lequel le matériau de bouchon est déposé sur la couche flottante et où ledit matériau de bouchon est choisi parmi des matériaux en mousse ou d'autres matériaux expansibles, des matériaux à base de ciment, incluant en particulier du béton et spécifiquement du béton haute résistance, ou des matériaux à base d'époxy à un ou deux composants, où ledit matériau de bouchon est positionné au moyen de conduits positionnés de manière amovible à l'intérieur du tuyau en vue de transporter le matériau de bouchon sur ladite surface de liquide.

8. Procédé selon l'une quelconque des revendications 1 à 7, dans lequel un ou plusieurs tuyaux secondaires sont disposés à l'intérieur du tuyau principal, et où le bouchon est placé entre le côté intérieur du tuyau principal et le côté extérieur du ou des tuyaux secondaires.

9. Procédé selon la revendication 1, dans lequel le tuyau principal est positionné dans un volume d'eau, et où le bouchon est placé à un niveau horizontal correspondant à la zone d'éclaboussure d'eau sur le tuyau, et où le niveau d'eau à l'intérieur du tuyau est abaissé au moyen d'une pompe.

10. Procédé dans lequel tout d'abord une couche flottante est fournie sur le dessus de la surface de liquide au moyen du procédé selon l'une quelconque des revendications 1 à 6, et ensuite une couche est fournie, laquelle est capable de s'attacher de manière adhésive au côté intérieur du tuyau, et finalement le matériau de bouchon est fourni sur le dessus de la couche fournie subséquemment au moyen du procédé selon l'une quelconque des revendications 5 ou 7.

11. Procédé selon la revendication 10, dans lequel la couche s'attachant de manière adhésive au côté intérieur du tuyau peut être sélectionnée parmi du PUR, PIR ou d'autres matériaux expansibles ou en mousse à un ou deux composants ou matériaux polymères, lequel matériau est positionné en utilisant un outil à un, deux ou plus de deux flexibles ayant une chambre de mélange et une buse de décharge dans une extrémité, et des moyens de connexion devant être connectés à des contenants de matériau et un équipement de dosage dans les extrémités opposées, et où ladite extrémité avec la chambre de mélange est abaissée dans le tuyau jusqu'à ce qu'elle soit légèrement au-dessus de la couche flottante, et où lesdits composants de matériau sont mélangés dans la chambre de mélange et sont déposés sur la couche flottante et on les laisse mousser et/ou se dilater et de ce fait adhérer au côté intérieur du tuyau.

12. Tuyau (1) pourvu, à l'intérieur, d'un bouchon, en particulier tuyau disposé verticalement ou de manière inclinée, ledit tuyau ayant des première et deuxième extrémités, où le bouchon comprend une couche flottante (6) placée sur le dessus d'une surface de liquide (8) présente à l'intérieur du tuyau, et où le bouchon comprend en outre un matériau de bouchon (7) positionné par-dessus ladite couche flottante (6).

13. Tuyau selon la revendication 12, dans lequel la couche flottante est fabriquée en un matériau choisi parmi des matériaux granulaires.

14. Tuyau selon la revendication 12, dans lequel la couche flottante est fabriquée en un matériau choisi parmi, ou en combinaison avec les matériaux suivants: granulés de polystyrène, pastilles, copeaux ou granulés de bois, polymères, billes remplies d'air, éponges flottantes, granulés d'argile expansée, ou d'autres matériaux granulaires flottants non absorbants les liquides.

15. Tuyau selon la revendication 12, dans lequel la couche flottante est fabriquée en un matériau choisi parmi des matériaux liquides.

16. Tuyau selon la revendication 15, dans lequel la couche flottante est fabriquée en un matériau en mousse liquide à deux composants.

17. Tuyau selon la revendication 12, dans lequel la couche flottante est fabriquée en un matériau choisi parmi des matériaux solides.
